# EUROPEAN PATENT SPECIFICATION

(11) **EP 0 946 386 B1**
(45) Date of publication and mention of the grant of the patent: **31.07.2002**
(21) Application number: 97950511.2
(22) Date of filing: 19.12.1997
(51) Int. Cl.: B62D 31/02, B60R 21/13

(54) **AN OMNIBUS PROVIDED WITH SAFETY MEANS SUCH AS A ROLL-OVER BAR AND METHOD FOR THE ASSEMBLY OF AN OMNIBUS**
OMNIBUS MIT SICHERHEITSVORRICHTUNGEN WIE EINE ÜBERROLLVORRICHTUNG, SOWIE VERFAHREN ZUM ZUSAMMENBAU EINES OMNIBUSES
AUTOBUS EQUIPE D'ORGANES DE SECURITE TELS QU'UN ARCEAU DE PROTECTION CONTRE LE RETOURNEMENT, ET PROCEDE D'ASSEMBLAGE DE L'AUTOBUS

(30) Priority: 30.12.1996 NL 1004901
(43) Date of publication of application: 06.10.1999
(73) Proprietor: Autobusfabriek Bova B.V., 5550 AA Valkenswaard (NL)
(72) Inventor: DE ROOIJ, Isaac, Cornelis, NL-5555 TL Dommelen (NL)
(74) Representative: Louet Feisser, Arnold
(86) International application number: NL9700716
(87) International publication number: WO9829291

(56) References cited:
- EP-A- 0 489 294
- FR-A- 2 373 433
- GB-A- 1 349 844
- US-A- 3 926 100
- US-A- 5 066 067

## Description

The invention relates to a bus provided with a roll-over bar protecting the passengers in the bus from being trapped in case the bus should turn over or roll over, which roll-over bar is connected to the side walls of the bus and extends over a large part of the height of a side wall, the width of the roof and a large part of the height of the other side wall of the bus. FR-A-2373433 discloses a bus having such safety means.

Such a roll-over bar, comprising two substantially vertically extending stiffening beams, prevents the space in which the passengers are present from being deformed to such an extent that said passengers will be trapped when the bus turns over or rolls over. It is usual, therefore, to make the roll-over bar as stiff as possible, in order to prevent it from being deformed by the large forces that occur when the bus turns over or rolls over.

In order to obtain sufficient stiffness the roll-over bar is usually formed from metal sections having great flexural stiffness, generally tubes having a circular cross section. The roll-over bar may be stiffened additionally near its corner points, and furthermore diagonally extending bars may be provided, all this in order to further increase the stiffness of the construction.

One drawback of such a roll-over bar is the comparatively great deal of space which the roll-over bar takes up, and furthermore its large weight, whereby it is moreover disadvantageous that the centre of gravity of the mass of the roll-over bar lies relatively high in the bus.

An object of the invention is to provide safety means for a bus, which obviate the above drawbacks.

According to the invention, in order to accomplish that objective, the material of the roll-over bar is a composite material comprising a plastic, preferably epoxy resin or polyester, as a result of which a relatively light and elastic construction can be obtained instead of a stiff, heavy construction.

The invention constitutes a deviation from the prevailing view that a roll-over bar should hardly deform, if at all, when a vehicle turns over or rolls over. In particular when the passenger compartment of the vehicle is large enough, as is the case with a bus, there is no objection against a certain degree of deformation of said passenger compartment, as sufficient space will be left for the passengers in the passenger compartment in spite of said deformation.

By using a material which is considerably more elastic than metal, such as a composite material, a much lighter construction of the safety means will suffice, because on the one hand a large part of the energy that occurs is taken up by the elastic deformation of the composite material, whilst on the other hand the material is lighter than metal.

Preferably a stiffening beam is present on either side of the bus, near the front side as well as near the rear side of the bus. The stiffening beams may thereby form part of a roll-over bar which extends over a large part of the height of a side wall, the width of the roof and a large part of the height of the other side wall of the bus, whereby no diagonally extending parts are present, so that the elastic deformability, and thus the degree to which forces can be taken up, is increased.

The term roll-over bar used herein is understood to include two stiffening beams forming a part of the roll-over bar.

In one preferred embodiment the stiffening beams, at least a substantial part thereof, have a cross section which is considerably larger in the direction of movement of the bus than in the transverse direction. In this manner it is achieved not only that the stiffening beam or the roll-over bar only takes up a limited amount of space, but also that the elastic deformability in the transverse direction of the bus is increased, without the strength being essentially decreased as a result thereof.

Preferably the dimension of the stiffening beam in the direction of movement is twice as large, preferably four times as large, than said transverse dimension, at least locally.

In one preferred embodiment the stiffening beams form part of a roll-over bar, which roll-over bar has a horizontal part, whose central portion has a transverse dimension which is at least twice as small, preferably four times as small, as the transverse dimension of the other parts of the roll-over bar. When the bus rolls over or turns over, the force to be taken up at that place is limited, whilst the smaller transverse dimension provides more headroom in the bus.

Preferably a stiffening beam comprises glass fibres, more preferably bundles of glass fibres, which extend substantially in the longitudinal direction of the stiffening beam, and which are substantially incorporated in parts of the stiffening beam located near the outside surface thereof, on both sides of the stiffening beam, seen in the direction of movement of the bus. Furthermore the stiffening beam preferably comprises glass fibre mats, which may be woven or nonwoven mats, which extend round the stiffening beam, near the outside surface thereof. Said glass fibre mats, if they are woven mats, are preferably disposed in such a manner that the fibres extend obliquely, preferably at an angle of substantially 45 degrees, to the longitudinal direction of the stiffening beam. In practice a roll-over bar of an epoxy resin or polyester comprising such a glass fibre reinforcement appears to provide an optimum effect.

According to another aspect of the invention the bottom end of the stiffening beam may be attached to the other parts of the bus in at least two spaced-apart places, which are located one above the other, said attachment being such that said bottom end cannot pivot and is capable of taking up a large torque in a transverse plane with respect to the bus. The two fastening points of the stiffening beam, which are located one above the other, or a vertically extending part of the roll-over bar, may be spaced a considerable distance apart thereby, for example more than 30 cm, preferably more than 50 cm, as a result of which a strong and reliable connection between the stiffening beam and the other parts of the bus will be maintained in case of a considerable deformation of the stiffening beam in a plane transversely to the direction of movement of the bus, since the forces being exerted on the spaced-apart fastening places decreases as the distance between said fastening places increases. In another preferred embodiment said distance is larger than 75 cm.

According to another aspect of the invention the stiffening beams are provided with fastening elements, which have been formed integral with the stiffening beam or the roll-over bar. When a roll-over bar is made of a composite material, fastening elements such as threaded holes and fastening flanges can be formed integral with the roll-over bar, without the strength of the roll-over bar being affected. Said composite material of the roll-over bar may also be provided with openings, which form ducts through which wires can be passed, whereby stiffening members can be provided at desired places in a simple manner.

Preferably said fastening elements comprise an edge extending in the direction of movement of the bus, on which wall parts of the bus can be attached, preferably by means of a glued connection.

According to another aspect of the invention a roll-over bar, which functions as an assembly frame for the front side of the bus, is present at the front side of the bus, whereby parts of the front side of the bus can be attached to the roll-over bar before the roll-over bar with the parts attached thereto is connected to the other parts of the bus as a preassembled unit. The roll-over bar of a composite material may be shaped such and be provided with fastening elements in such a manner that the roll-over bar can also function as an assembly frame, in particular because the roll-over bar is very strong.

According to another aspect of the invention a roll-over bar, which is integral with a three-dimensionally curved plate-shaped part which substantially forms the rear side of the bus, is present near the rear side of the bus. By forming said roll-over bar integral with the rear side of the bus, it becomes possible to use a lighter construction for the roll-over bar, because the rear side of the bus, at least part thereof, which is integral therewith, contributes to the required resistance against excessive deformation that may occur when the bus turns over or rolls over.

The invention furthermore relates to a method of assembling a bus, wherein parts of the front side of the bus are connected to a roll-over bar, which functions as an assembly frame, before said roll-over bar with the parts connected thereto is attached to the other parts of the bus.

The invention also relates to a method of assembling a bus, wherein the rear side of the bus is formed integral with a roll-over bar before said rear side is attached to the other parts of the bus. Such methods lead to a simplification of the manufacturing process of a bus, and furthermore it contributes towards reducing the weight of the bus, since fewer fitting materials are required.

Further aspects of the invention, which may be used both separately and in combination with each other, are disclosed in the description of the figures and defined in the claims.

For a better understanding of the invention an embodiment of a roll-over bar of a bus will be described hereafter with reference to the drawing.
Figure 1 shows a roll-over bar which is attached to a part of the frame of a bus;
Figure 2 shows a roll-over bar and parts of the front side of a bus to be connected thereto;
Figure 3 shows a roll-over bar which is integral with the rear wall of a bus; and
Figure 4 is a cross-sectional view of a stiffening beam.

The figures are merely diagrammatic representations of the embodiment.

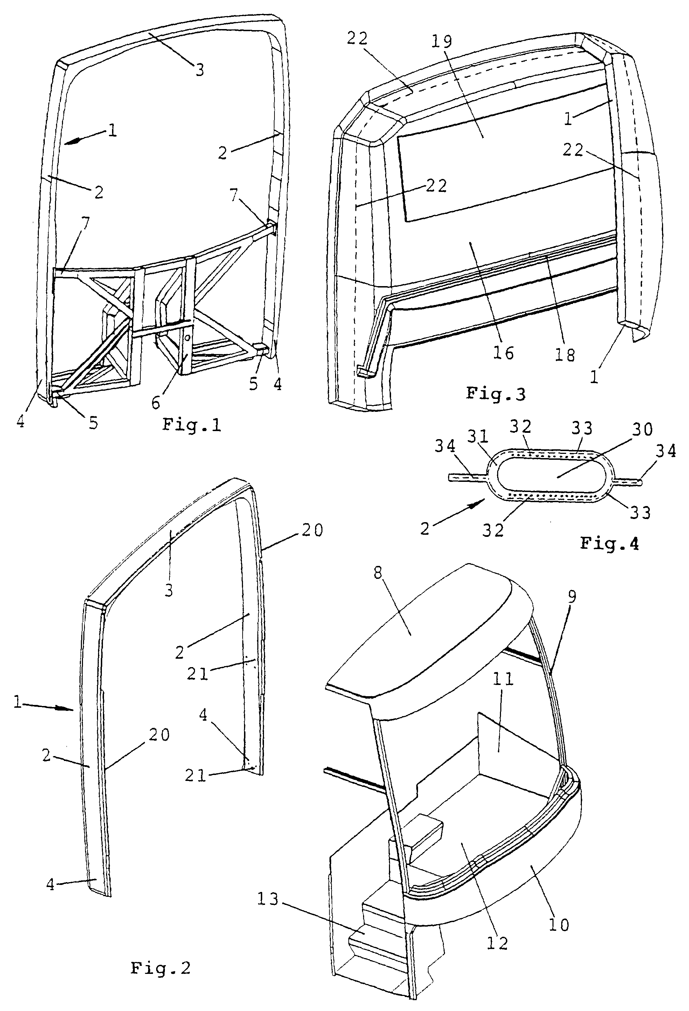

Figure 1 shows a roll-over bar 1, which consists of two substantially vertical parts 2 and a substantially horizontal part 3 at the upper side. The roll-over bar has a substantially rectangular cross section all around, with the short side of the rectangle extending parallel to the plane in which the roll-over bar extends, which is a transverse plane of the bus. The roll-over bar is made of a composite material, which possesses a much greater elastical deformability than steel and which is furthermore considerably lighter than steel. The roll-over bar may be hollow or solid, and it is preferably provided with a foam core.

Near its downwardly extending bottom ends 4 the roll-over bar is attached, for example by means of bolts, to a part 5 of frame 6 of the bus. The vertical part 2 of roll-over bar 1 is connected to part 7 of frame 6 a considerable distance away from said bottom end 4. Also this connection may be a screw or bolt connection. Since the distance between parts 5 and 7 of frame 6 is relatively large, in particular more than 30 cm, preferably more than 50 cm, a fixation of vertical part 2 of roll-over bar 1 to frame 6 of the bus is obtained, whereby vertical part 2 is capable of taking up large forces in the plane of roll-over bar 1. Frame 6 of the bus is a stiff structure, in particular as a result of the use of diagonal transverse connections.

Since roll-over bar 1 possesses a high degree of elastic deformability, in particular in a transverse plane of the bus, a relatively large amount of energy can be taken up under elastic deformation when the bus turns over or rolls over, whilst the roll-over bar is of relatively light construction. In the case of a bus it is not problematic thereby that the space accommodating the passengers will be slightly smaller, since a relatively large space is available for the passengers.

Figure 2 shows the front roll-over bar 1 of a bus, which roll-over bar also functions as an assembly frame for parts of the front side of the bus. Since roll-over bar 1 is made of a composite material, the roll-over bar can be provided in a simple manner with fastening elements 20, 21 formed integral therewith. Fastening elements 21 function to secure the roll-over bar to the frame of the bus, and fastening elements 20 are made in the form of a moulded edge for securing the various parts of the bus thereto. This makes it possible to use the roll-over bar as an assembly frame for said parts, for example the parts shown in Figure 2. Figure 2 shows the front part of roof 8 of the bus, frame 9 of the windscreen, a three-dimensionally curved front plate 10, a portion of side wall 11 and a floor portion 12, which also comprises steps 13, via which the passengers can board the bus. All these parts can be attached to roll-over bar 1 before roll-over bar 1 is mounted in frame 6 of the bus. The advantage of assembling a bus in such a manner is that the various components to be assembled can be finished to a considerable degree before these parts become difficult to gain to, due to the fact that there is only limited room in and round the bus.

Figure 3 shows the rear side of the bus, which can likewise be attached to the other parts of the bus in the form of a preassembled component. The rear side shown in Figure 3 consists substantially of a three-dimensionally shaped part 16 of the rear wall of the bus. Part 16 is integral with a roll-over bar 1 of the kind described above with reference to Figure 1. Rear roll-over bar 1 may be of relatively light construction, since it derives part of its strength from rear wall 16 of the bus, which is integral therewith.

In Figure 3 roll-over bar 1 is integrated in rear wall 16, which is provided with elements 18 for fastening the back seat of the bus thereto, and with an opening 19 for a window. Roll-over bar 1 is indicated by dashed line 22 in the figure.

Figure 4 is a cross-sectional view of a stiffening beam 2, or the horizontal part of roll-over bar 1. Central part 30 of stiffening beam 2 is hollow or provided with a foam core, seen in cross-sectional view it comprises a length which amounts to about four times the width. Central portion 30 is surrounded by a tubular layer 31 of a plastic, for example epoxy resin or polyester. Incorporated in the plastic are bundles 32 of glass fibres, which are indicated by circles in the figure and which extend in the longitudinal direction of stiffening beam 2, that is, perpendicularly to the plane of the drawing. Said bundles 32 are only incorporated in the long sides of the cross section.

Furthermore glass fibre mats 33 are indicated by a dashed line in Figure 4. Glass fibre mats 33 extend over the entire circumference of stiffening beam 2, and also into the flanges or edges 34 which are present on either side of stiffening beam 2. Other parts, in particular wall parts, can be attached to said edges, preferably by means of a glued connection. Glass fibre mats 33 are preferably woven mats; the glass fibres preferably extend at an angle of approximately 45 degrees to the plane of the drawing.

Layer 31 of plastic material may comprise several layers of glass fibre mats 33 and/or glass fibre bundles 32, but for the sake of clarity they are not shown in the Figure.

The illustrated embodiment is to be considered as merely an example, several other manners of implementing the invention are possible within the scope of the claims.

## Claims

1. A bus provided with a roll-over bar (1) protecting the passengers in the bus from being trapped in case the bus should turn over or roll over, which roll-over bar (1) is connected to the side walls of the bus and extends over a large part of the height of a side wall, the width of the roof and a large part of the height of the other side wall of the bus, **characterized in that** the material of the roll-over bar (1) is a composite material comprising a plastic, preferably epoxy resin or polyester.

2. A bus according to claim 1, **characterized in that** said roll-over bar (1) has a horizontal part (3), whose central portion has a transverse dimension which is at least twice as small, preferably four times as small, as the transverse dimension of the other parts of the roll-over bar (1).

3. A bus according to any one of the preceding claims, **characterized in that** the roll-over bar (1) comprises glass fibres, preferably bundles of glass fibres, which extend substantially in the longitudinal direction of the roll-over bar (1), and which are substantially incorporated in parts of the roll-over bar (1) located near the outside surface thereof, on both sides of the roll-over bar (1), seen in the direction of movement of the bus.

4. A bus according to any one of the preceding claims, **characterized in that** the roll-over bar (1) comprises glass fibre mats, which may be woven or nonwoven mats, which extend round the roll-over bar (1), near the outside surface thereof.

5. A bus according to claim 4, **characterized in that** woven glass fibre mats are disposed in such a manner that the fibres extend obliquely, preferably at an angle of substantially 45 degrees, to the longitudinal direction of the roll-over bar (1).

6. A bus according to any one of the preceding claims, **characterized in that** the bottom end of the roll-over bar (1) is attached to the other parts of the bus in at least two spaced-apart places at both sides of the bus, which are located one above the other, said attachment being such that said bottom end cannot pivot in a transverse plane with respect to the bus.

7. A bus according to any one of the preceding claims, **characterized in that** the roll-over bar (1) is provided with fastening elements, which have been formed integral with the roll-over bar (1).

8. A bus according to claim 7, **characterized in that** said fastening elements comprise an edge (20) extending in the direction of movement of the bus.

9. A bus according to any one of the preceding claims, **characterized in that** a roll-over bar (1), which functions as an assembly frame for the front side of the bus, is present near the front side of the bus, whereby parts of the front side of the bus can be attached to the roll-over bar (1) before the roll-over bar (1) with the parts attached thereto is connected to the other parts of the bus as a preassembled unit.

10. A bus according to any one of the preceding claims, **characterized in that** a roll-over bar (1), which is integral with a three-dimensionally curved plate-shaped part which substantially forms the rear side of the bus, is present near the rear side of the bus.

11. A roll-over bar as defined in any of the preceding claims.

12. A method of assembling a bus, **characterised in that** parts of the front side of the bus are connected to a roll-over bar (1) according to claim 11, which functions as an assembly frame, before said roll-over bar (1) with the parts connected thereto is attached to the other parts of the bus.

13. A method of assembling a bus, **characterised in that** the rear side of the bus is formed integral with a roll-over bar (1) according to claim 11 before said rear side is attached to the other parts of the bus.

## Patentansprüche

1. Bus, der mit einem Überrollbügel (1) versehen ist, welcher die Passagiere in dem Bus davor schützt, eingeschlossen zu werden, falls der Bus umfallen oder sich überschlagen sollte, wobei der Überrollbügel (1) mit den Seitenwanden des Busses verbunden ist und sich über einen großen Abschnitt der Höhe einer Seitenwand, der Breite des Daches und einen großen Abschnitt der Höhe der anderen Seitenwand des Busses erstreckt, **dadurch gekennzeichnet, daß** das Material ein Verbundwerkstoff ist, der einen Kunststoff, vorzugsweise ein Epoxidharz oder Polyester umfaßt.

2. Bus nach Anspruch 1, **dadurch gekennzeichnet, daß** der Überrollbügel (1) einen horizontalen Abschnitt (3) aufweist, dessen zentraler Abschnitt eine Querabmessung hat, die wenigstens halb so groß, vorzugsweise ein Viertel so groß wie die Querabmessung der anderen Abschnitte des Überrollbügels (1) ist.

3. Bus nach einem der vorhergehenden Ansprüche, **dadurch gekennzeichnet, daß** der Überrollbügel (1) Glasfasern, vorzugsweise Glasfaserbündel umfaßt, die im wesentlichen in Längsrichtung des Überrollbügels (1) verlaufen, und die im wesentlichen in Abschnitte des Überrollbügels (1), die nahe von dessen Außenfläche angeordnet sind, an beiden Seiten des Überrollbügels (1), in Fahrtrichtung des Busses gesehen, eingebaut sind.

4. Bus nach einem der vorhergehenden Ansprüche, **dadurch gekennzeichnet, daß** der Überrollbügel (1) Glasfasermatten umfaßt, die gewebte oder nicht-gewebte Matten sein können, die um den Überrollbügel (1), nahe von dessen Außenfläche verlaufen.

5. Bus nach Anspruch 4, **dadurch gekennzeichnet, daß** die gewebten Glasfasermatten derart angeordnet sind, daß die Fasern geneigt, vorzugsweise unter einem Winkel von im wesentlichen 45°, bezüglich der Längsrichtung des Überrollbügels (1) verlaufen.

6. Bus nach einem der vorhergehenden Ansprüche, **dadurch gekennzeichnet, daß** das untere Ende des Überrollbügels (1) an den anderen Abschnitten des Busses an wenigstens zwei voneinander beabstandeten Stellen an beiden Seiten des Busses angebracht ist, die übereinander angeordnet sind, wobei die Anbringung derart ist, daß das untere Ende nicht in einer Querebene bezüglich des Busses schwenken kann.

7. Bus nach einem der vorhergehenden Ansprüche, **dadurch gekennzeichnet, daß** der Überrollbügel (1) mit Befestigungselementen ausgestattet ist, die integral mit dem Überrollbügel (1) ausgebildet worden sind.

8. Bus nach Anspruch 7, **dadurch gekennzeichnet, daß** die Befestigungselemente eine Kante (20) umfassen, die sich in Fahrtrichtung des Busses erstreckt.

9. Bus nach einem der vorhergehenden Ansprüche, **dadurch gekennzeichnet, daß** ein Überrollbügel (1), der als ein Montagerahmen für die Vorderseite des Busses funktioniert, nahe der Vorderseite des Busses vorliegt, wobei Abschnitte der Vorderseite des Busses am Überrollbügel (1) angebracht werden können, bevor der Überrollbügel (1) mit den daran angebrachten Abschnitten mit den anderen Abschnitten des Busses als eine vorgefertigte Einheit verbunden wird.

10. Bus nach einem der vorhergehenden Ansprüche, **dadurch gekennzeichnet, daß** ein Überrollbügel (1), der integral mit dem dreidimensional gekrümmten plattenförmigen Abschnitt ist, der im wesentlichen die Rückseite des Busses bildet, nahe der Rückseite des Busses vorliegt.

11. Überrollbügel, wie er in einem der vorhergehenden Ansprüche definiert ist.

12. Verfahren zum Montieren eines Busses, **dadurch gekennzeichnet, daß** Abschnitte der Vorderseite des Busses mit einem Überrollbügel (1) nach Anspruch 11 verbunden werden, der als ein Montagerahmen funktioniert, bevor der Überrollbügel (1) mit den anderen daran angebrachten Abschnitten an den anderen Abschnitten des Busses angebracht wird.

13. Verfahren zum Montieren eines Busses, **dadurch gekennzeichnet, daß** die Rückseite des Busses integral mit einem Überrollbügel (1) nach Anspruch 11 ausgebildet wird, bevor die Rückseite an den anderen Abschnitte des Busses angebracht wird.

## Revendications

1. Autobus muni d'un arceau de protection contre le retournement (1) protégeant les passagers dans l'autobus qui sont piégés dans le cas où le bus devrait se retourner ou se coucher, lequel arceau de protection contre le retournement (1) est raccordé aux parois latérales du bus et s'étend sur une partie importante de la hauteur d'une paroi latérale, de la largeur du plancher et une partie importante de la hauteur de l'autre paroi latérale de l'autobus, **caractérisé en ce que** le matériau de l'arceau de protection contre le retournement (1) est un matériau composite comprenant une matière plastique, de préférence une résine époxy ou un polyester.

2. Autobus selon la revendication 1, **caractérisé en ce que** ledit arceau de protection contre le retournement (1) comporte une partie horizontale (3), dont la partie centrale présente une dimension transversale qui est au moins deux fois aussi petite, de préférence quatre fois plus petite que la dimension transversale des autres parties de l'arceau de protection contre le retournement (1).

3. Autobus selon l'une quelconque des revendications précédentes, **caractérisé en ce que** l'arceau de protection contre le retournement (1) comprend des fibres de verre, de préférence des faisceaux de fibres de verre, qui s'étendent sensiblement dans la direction longitudinale de l'arceau de protection contre le retournement (1), et qui sont nettement incorporées dans des parties de l'arceau de protection contre le retournement (1) placées à proximité de sa surface extérieure, sur les deux côtés de l'arceau de protection contre le retournement (1) vu dans le sens du déplacement de l'autobus.

4. Autobus selon l'une quelconque des revendications précédentes, **caractérisé en ce que** l'arceau de protection contre le retournement (1) comprend des nattes de fibres de verre qui peuvent être tissées ou des nattes non-tissées qui s'étendent autour de l'arceau de protection contre le retournement (1) à proximité de sa surface externe.

5. Autobus selon la revendication 4, **caractérisé en ce que** les nattes de fibres de verre tissées sont disposées d'une manière telle que les fibres s'étendent à l'oblique, de préférence selon un angle de sensiblement 45 degrés, par rapport à la direction longitudinale de l'arceau de protection contre le retournement (1).

6. Autobus selon l'une quelconque des revendications précédentes, **caractérisé en ce que** l'extrémité inférieure de l'arceau de protection contre le retournement (1) est fixée aux autres parties de l'autobus en au moins deux emplacements espacés au niveau des deux côtés de l'autobus, lesquels sont placés l'un au-dessus de l'autre, ladite fixation étant telle que l'extrémité inférieure ne peut pas pivoter dans un plan transversal par rapport à l'autobus.

7. Autobus selon l'une quelconque des revendications précédentes, **caractérisé en ce que** l'arceau de protection contre le retournement (1) est pourvu d'éléments de fixation, lesquels ont été formés solidairement avec l'arceau de protection contre le retournement (1).

8. Autobus selon la revendication 7, **caractérisé en ce que** lesdits éléments de fixation comprennent un bord (20) s'étendant dans le sens de déplacement de l'autobus.

9. Autobus selon l'une quelconque des revendications précédentes, **caractérisé en ce qu'**un arceau de protection contre le retournement (1) qui agit comme un cadre d'assemblage pour le côté avant de l'autobus, est présent près du côté avant de l'autobus, avec pour effet que les parties du côté avant de l'autobus peuvent être fixées à l'arceau de protection contre le retournement (1) avant que l'arceau de protection contre le retournement (1) avec les parties fixées à celui-ci soit raccordé aux autres parties de l'autobus comme une unité préassemblée.

10. Autobus selon l'une quelconque des revendications précédentes, **caractérisé en ce qu'**un arceau de protection contre le retournement (1) qui est solidaire d'une partie en forme de plaque incurvée tridimensionnellement qui forme sensiblement le côté arrière de l'autobus, est présent près du côté arrière de l'autobus.

11. Arceau de protection contre le retournement selon l'une quelconque des revendications précédentes.

12. Procédé d'assemblage d'un autobus, **caractérisé en ce que** des parties du côté avant de l'autobus sont raccordées à un arceau de protection contre le retournement (1) selon la revendication 11, lequel agit comme un cadre d'assemblage, avant que ledit arceau de protection contre le retournement (1) avec les parties connectées à celui-ci soit fixé aux autres parties de l'autobus.

13. Procédé d'assemblage d'un autobus, **caractérisé en ce que** le côté arrière de l'autobus est formé solidairement avec l'arceau de protection contre le retournement (1) selon la revendication 11, avant que ledit côté arrière soit fixé aux autres parties de l'autobus.
